# EUROPÄISCHE PATENTSCHRIFT

(11) **EP 2 142 857 B1**
(45) Veröffentlichungstag und Bekanntmachung des Hinweises auf die Patenterteilung: **14.03.2018**
(21) Anmeldenummer: 08716022.2
(22) Anmeldetag: 25.02.2008
(51) Int. Cl.: F24F 11/00

(54) **REGELUNGSVORRICHTUNG UND VERFAHREN ZUR RAUMINDIVIDUELLEN ANZEIGE UND REGELUNG DER RAUMLUFTTEMPERATUR UND -QUALITÄT**
CONTROL DEVICE AND METHOD FOR USING SAID CONTROL DEVICE
DISPOSITIF DE RÉGULATION ET PROCÉDÉ D'UTILISATION D'UN TEL DISPOSITIF DE RÉGULATION

(30) Priorität: 05.03.2007 DE 102007010977; 22.06.2007 DE 102007029325
(43) Veröffentlichungstag der Anmeldung: 13.01.2010
(73) Patentinhaber: AL-KO Therm GmbH, 89343 Jettingen-Scheppach (DE)
(72) Erfinder: HECKER, Thomas, 73557 Mutlangen (DE)
(74) Vertreter: Binder, Armin
(86) Internationale Anmeldenummer: PCT/EP2008/001477
(87) Internationale Veröffentlichungsnummer: WO 2008/107088

(56) Entgegenhaltungen:
- DE-A1- 10 350 591
- DE-U1- 29 610 709
- US-A- 5 255 556
- US-A1- 2005 119 793
- US-B1- 6 578 770

## Beschreibung

Die Erfindung betrifft eine Regelungsvorrichtung zur Optimierung des Raumklimas in Innenräumen von Gebäuden mit einem Raumbediengerät zur Voreinstellung und Visualisierung der Raumtemperaturvorgabe mit einem Temperatursensor und ein Verfahren zur Anwendung einer derartigen Regelungsvorrichtung.

Aus der DE 296 10 709 U1 ist eine Regelungsvorrichtung zur Optimierung des Raumklimas in Innenräumen von Gebäuden bekannt, bei der mittels eines Luftqualitätssensors in einem Raum ermittelte Werte für die Luftqualität an einer Anzeige dargestellt werden. Die hier vorgeschlagene Lösung, Werte anzuzeigen, erfordert jedoch das Eingreifen des Menschen, um entsprechend der vorhandenen Werte eine Belüftung des Raumes vorzunehmen. Die in der Druckschrift offenbarte Regelungsvorrichtung ähnelt damit den ebenfalls allgemein bekannten Lüftungsampeln, die mittels verschiedenfarbiger Leuchtmittel die Qualität der in einem Raum vorhanden Luft und damit ein gegebenenfalls erforderlich werdendes Eingreifen durch Lüftung anzeigen. Auch diese Lüftungsampeln bestimmen die Luftqualität mit den bereits erwähnten Luftqualitätssensoren.
Darüber hinaus sind neben der Möglichkeit, manuell einzugreifen und durch Lüften die Qualität der Raumluft zu verbessern, auch Lösungen bekannt, die so genannte "Einzelraumregler" aufweisen. Dabei handelt es sich um Einrichtungen, die über ein in einem Raum vorhandenes Raumbediengerät die Regelung der Temperatur, der Luftqualität oder der Luftfeuchte ermöglichen.

Luftqualitätssensoren, wie der handelsübliche "LuQuaS-Sensor", sind ebenfalls bekannt und werden bereits in Lüftungs- und Klimaanlagen zum Einsatz gebracht.

Nachteilig bei den bekannten Lösungen ist, dass hierbei zumeist das manuelle Eingreifen des Menschen anhand angezeigter Luftqualitätswerte erforderlich ist. Ausführungen mit einer Regelung der Luftqualität beziehen sich auf Einzelräume oder beaufschlagen sämtliche angeschlossenen Räume mit denselben Luft- und Temperaturverhältnissen. Dabei werden zwar Energieeinsparungen ermöglicht. Diese werden jedoch zukünftig nicht mehr ausreichen. Zudem fehlt es bei den Einzelraumvarianten an der Möglichkeit, für eine Person oder für mehrere Personen subjektiv angenehme Werte vorab einstellen zu können. Jedes Raumklima wird von verschiedenen Personen nämlich auch subjektiv unterschiedlich wahrgenommen. Folglich fehlt es bisher an einer an spezielle Bedürfnisse angepassten Möglichkeit, die Luftqualität eines Raumes sowie das Raumklima insgesamt energiesparend zu optimieren.
Die Druckschrift US 6 578 770 B1 offenbart eine Regelungsvorrichtung zur raumindividuellen Optimierung eines Raumklimas in Innenräumen von Gebäuden mit einem Raumbediengerät, welches Mittel zur Einstellung und Visualisierung einer Raumtemperaturvorgabe aufweist, und mit einem Temperatursensor ausgerüstet ist, wobei die automatischen Regelung der Temperatur im Raumbediengerät angeordnet ist und eine Steuerverbindung zu einer zentralen Klimaanlage vorgesehen ist, über welche die zur Regelung erforderlichen Stellwerte an die zentrale Klimaanlage weitergeleitet werden. Hierfür wird der CO₂-Gehalt der Luft im zu klimatisierenden Raum gemessen. Die Druckschrift US 6 578 770 B1 wird als nächster Stand der Technik angesehen. Weiterhin offenbart die Druckschrift US 5 255 556 A1 eine Regelungsvorrichtung zur Optimierung eines Raumklimas in Innenräumen mit einem Raumbediengerät mit einem Temperatursensor, einem Luftqualitätssensor und einem Mitteln zur Visualisierung einer im Raum vorliegenden Luftqualität, wobei hierfür der CO-, CH₄- oder SO₂-Gehalt der Luft gemessen.
Es ist daher Aufgabe der Erfindung, eine Regelungsvorrichtung zur Optimierung des Raumklimas in Innenräumen von Gebäuden sowie ein Verfahren zur Anwendung dieser Regelungsvorrichtung zu schaffen, die individuell einstellbar das Raumklima automatisch hinsichtlich des Energieverbrauches optimiert regelt.

Diese Aufgabe wird durch die Merkmale der unabhängigen Patentansprüche gelöst. Vorteilhafte Weiterbildungen der Erfindung sind Gegenstand untergeordneter Ansprüche.

Der Erfinder hat erkannt, dass es im Zusammenhang mit dem Einsatz zentraler Klimaanlagen vorteilhaft ist, die Raumtemperatur und Luftqualität individuell für jeden Raum zu regeln, um eine möglichst optimale Energieausnutzung zu erreichen. Nur durch eine solche dezentrale Messwerterfassung und Regelung der Raumtemperatur und der Luftqualität ist es möglich, die durch eine Klimaanlage bereitgestellten Luftmengen optimal unter gleichzeitiger Berücksichtigung der notwendigen Heizungs- beziehungsweise Kühlungsleistung zu verteilen, ohne unnötige Energien zu verschwenden.

Die Luftqualitäts- und die Temperaturregelung sind daher gemäß dieser Erfindung in einem Gerät vereint. Hierdurch kann der Zuluftvolumenstrom entweder temperaturgeführt oder luftqualitätsgeführt werden. Im Konfliktfall beider Vorgaben entscheidet die Temperatur, die bei den in den Räumen befindlichen Personen das überwiegende Wohlfühlkriterium darstellt. Das erfindungsgemäße Raumbediengerät regelt dabei die Temperatur und die Luftqualität in jedem Raum selbstständig und dezentral. So ist es erstmalig möglich, Luftqualität und Temperatur gleichzeitig optimal zu regeln.

Auf der Basis dieser Grundgedanken schlägt der Erfinder eine Regelungsvorrichtung zur raumindividuellen Optimierung eines Raumklimas in Innenräumen von Gebäuden mit einem Raumbediengerät vor, wobei die Regelung der Luftqualität über einen Volumenstrom der Außenluftzufuhr und der Abluftabführung geregelt wird, welche Mittel zur Einstellung und Visualisierung einer Raumtemperaturvorgabe und Mittel zur Visualisierung einer im Raum vorliegenden Luftqualität aufweist, und mit einem Temperatursensor sowie mit einem Luftqualitätssensor ausgerüstet ist, wobei die automatische Regelung der Temperatur und der Luftqualität im Raumbediengerät angeordnet ist und eine Steuerverbindung zu einer zentralen Klimaanlage vorgesehen ist, über welche die zur Regelung erforderlichen Stellwerte an die zentrale Klimaanlage weitergeleitet werden können, wobei das Raumbediengerät eine Anzeige der Luftqualität in RAL-Klassen und/oder in der Einheit Dezipol aufweist.

Mit der erfindungsgemäßen Lösung ist es gelungen, in sehr einfacher Weise eine individuelle Regelung des Raumklimas bei optimiertem Energieverbrauch umzusetzen. Temperatur und Luftqualität können dabei durch die Visualisierung nachvollziehbar entsprechend persönlicher Bedürfnisse manuell eingestellt werden. Die Regelungsvorrichtung steuert anschließend die Peripheriegeräte an, die zur Erreichung eines derart optimierten Raumklimas erforderlich sind und überwacht gleichzeitig die Einhaltung anhand objektiver Messwerte der Luftqualität.

Eine erste Weiterbildung der Erfindung besteht darin, dass die Regelungsvorrichtung eine Sensorregelung der Außenluftzufuhr und der Abluftabführung aufweist. In Abhängigkeit der von dem oder den Sensoren erfassten Luftqualitätswerte werden dabei die Außenluftzufuhr beziehungsweise die Abluftabführung geregelt. So kann erreicht werden, dass beispielsweise immer nur soviel frische Luft von außen zugeführt wird, wie erforderlich ist. So werden automatische Fensterlüftungen oder mechanische Lüftungen mit Volumenstromreglern optimal geregelt. Energieverluste durch zu langes Lüften können damit wirksam vermieden werden. Als Sensoren sind Luftqualitätssensoren geeignet.

Der Erfinder schlägt ferner vor, dass das Raumbediengerät ein Master für Kühl- und Heizaggregate sowie für Außenluftzufuhr und Abluftabführung und ein Slave für eine übergeordnete Leittechnik ist. Durch die damit erreichte Integration der Erfindung in das komplexe Gesamtsystem einer Klimaanlage bleibt die Verwendbarkeit der vorgestellten Lösung nicht auf Einzelraumanwendungen beschränkt, sondern kann auch auf Gebäudekomplexe angewendet werden.

Eine besondere Schlüsselstellung kommt bei der erfindungsgemäßen Ausführung einer Regelungsvorrichtung dem Raumbediengerät zu, das bevorzugt eine Baueinheit aus einem Mikroprozessor, Mitteln zur Einstellung und Visualisierung der Raumtemperaturvorgabe und zur Visualisierung der Luftqualität, einer volumenstromabhängigen Sensorregelung der Außenluftzufuhr und der Abluftabführung sowie einem Luftqualitätssensor bildet. Damit kann ein kompaktes System bereitgestellt werden, das flexibel einsetzbar ist.

Um mit einer Regelungsvorrichtung verschiedenartige Anforderungen erfüllen zu können, ist ein Höchstmaß an flexiblen Einstellungsmöglichkeiten erforderlich. Hier sieht der Erfinder eine Möglichkeit der Umsetzung darin, dass das Raumbediengerät eine frei programmierbare, integrierte Steuerung (DDC = Direct digital control) für Sensoren und Aktoren aufweist. Durch die freie Programmierbarkeit kann ein Maximum an Flexibilität erreicht werden.

Zur weiteren Verbesserung dieses Zieles ist es darüber hinaus von Vorteil, wenn das Raumbediengerät in ein Bussystem integriert ist und zur Kopplung mehrerer Raumbediengeräte untereinander mit einem Buskoppler betrieben wird. Das Raumbediengerät kann in zwei unabhängige Bussysteme integriert sein. Dies bietet den Vorzug, dass das Raumbediengerät in das erste Bussystem als Master für die Raumsteuerung eingebunden und über das zweite Bussystem als Slave mit der Gesamtklimaanlage verbunden werden kann. Damit lassen sich mit einer DDC beispielsweise beliebig viele Raumbediengeräte zusammenschalten. Aufgrund einer durchgängigen Bus-Kommunikation sind hohe E-nergieeinsparungspotentiale im Gesamtsystem möglich. Der Bus-koppler erweitert folglich die Anzahl der anschließbaren Geräte.

Insbesondere bei der Erstinstallation der erfindungsgemäßen Regelungsvorrichtung, aber auch während ihres Betriebes ist es notwendig, den Luftqualitätssensor zu kalibrieren. Dabei erfolgt ein Verschieben der logarithmisch Messwertskala der Luftqualität gemäß den aktuell herrschenden Raumbedingungen auf einen Ausgangswert (so genannte Nullwerteinstellung). Der Luftqualitätssensor kann dabei entweder den Außenluft-Bedingungen angepasst werden oder es kommt ein separater Luftqualitätssensor zum Einsatz, der außerhalb des zu klimatisierenden Raumes angeordnet ist und somit zur Kalibrierung Außenluft-Messwerte der Luftqualität liefert. Die Kalibrierung ist beispielsweise auch deshalb sinnvoll, weil die Luftqualität der Außenluft regional unterschiedlich ist.

Der Erfinder hat auch erkannt, dass der "Faktor Mensch" die Vorteile einer automatischen Regelungsvorrichtung zumindest teilweise aufheben kann, indem beispielsweise fehlerhafte Einstellungen vorgenommen oder einmal eingestellte Werte nicht wieder geändert werden. Diesem Umstand kann man mit einer Ausgestaltung der Erfindung begegnen, die darin besteht, dass die am Raumbediengerät eingestellte Luftqualität eine Übersteuerungsfunktion zu der Automatik-Luftqualitätsregelung aufweist. Damit ist eine manuelle Änderung der Werte der Regelungsvorrichtung möglich. Die eingestellte Änderung, die beispielsweise in einer bestimmten manuellen Temperatur- und/oder Luftqualitätsvorgabe bestehen kann, wird demgemäß nur für eine bestimmte Zeit aufrechterhalten. Nach Ablauf dieser definierten Zeitspanne geht die Regelungsvorrichtung wieder in den Automatikbetrieb zurück, so dass objektiv eine optimale Klimatisierung erzielt wird.

Da der Bedarf an frischer Luft in einem Raum subjektiven Schwankungen unterliegt, ist es von Vorteil, wenn zumindest der Volumenstrom der Außenluftzufuhr manuell regelbar ist. Um diese Einstellung wieder aufheben zu können, ist ferner vorgesehen, dass die zuvor bereits beschriebene Übersteuerungsfunktion wirkt oder der manuell eingestellte Wert für den Volumenstrom der Außenluftzufuhr manuell auf "Automatikbetrieb" umstellbar ist. Eine Weiterführung dieses Gedankens geht dahin, dass die manuell eingestellte Außenluftzufuhr für eine frei wählbare Nachlaufzeit bis zum automatischen Umschalten auf "Automatikbetrieb" der Regelungsvorrichtung einstellbar ist. Diese Nachlaufzeit kann zwischen 5 Minuten und 2 Stunden betragen.

Die Regelungsvorrichtung nach der Erfindung und insbesondere das Raumbediengerät stellt eine sehr komplexe Einheit mit zahlreichen Funktionen dar. Um das Raumbediengerät, welches in Räumen montiert wird, möglichst kompakt ausführen zu können, wird vorgeschlagen, an dem Raumbediengerät eine erste und eine zweite Bedienebene vorzusehen. Dabei kann zum Beispiel eine verdeckt angeordnete Bedienebene durch zumindest teilweises Lösen der anderen, diese abdeckenden Bedienebene erreichbar gemacht werden.

Das Raumbediengerät ist gemäß einer speziellen Ausführungsvariante derart ausgeführt, dass die lösbare Bedienebene ein Bedienelement des Raumbediengerätes, vorzugsweise der Temperaturregler, ist. Dieser Temperaturregler kann folglich insgesamt abgenommen oder beispielsweise abgeklappt werden, um die dahinter angeordnete weitere Bedienebene zu erreichen. Vorzugsweise können hier Einstellungen vorgenommen werden, die über eine längere Zeitspanne nicht verändert werden müssen.

Zur Bedienung mehrerer Räume durch die Regelungsvorrichtung schlägt der Erfinder entsprechend einer Weiterbildung der Erfindung vor, dass mittels eines Volumenstromreglers über die Leittechnik die energieoptimierte Ansteuerung eines Ventilators eines zentralen Lüftungsgerätes ermöglicht wird. Damit kann das zentrale Lüftungsgerät beispielsweise für die Versorgung mehrerer Räume mit Außenluft genutzt werden, so dass nicht jeder Raum ein separates Lüftungsgerät benötigt. So besteht ein erhebliches Energieeinsparungspotential insbesondere in größeren Gebäuden mit zahlreichen Räumen.

Eine weitere Neuerung der Erfindung besteht darin, dass das Raumbediengerät eine Anzeige der Luftqualität in RAL-Klassen und/oder in der Einheit Dezipol und/oder in einer Ausführungsform der Erfindung zudem eine Anzeige der Empfindlichkeit der Luftqualität aufweist. Die RAL-Klassen sind nach der DIN EN 13779 klassifizierte Luftqualitätsklassen, die in der Einheit Dezipol angegeben werden und ein Maß für die Geruchsimmission, bei der der Luftvolumenstrom der Lüftung mit einfließt, darstellen. Das Dezipol beschreibt die empfundene Luftqualität. Diese Maßeinheit wurde von Professor Ole Fanger eingeführt. Ein Dezipol ist definiert durch eine Verunreinigung eines Raumes mit einem Olf, welchem zehn Liter frische Luft pro Sekunde im Mischlüftungsverfahren zugeführt werden. Das Olf als Maß für die Geruchsemission ist abgeleitet vom lateinischen Wort für Geruchssinn (=olfactus), und stellt eine Maßeinheit zur Bewertung der Stärke einer Geruchsquelle dar. Erfasst werden dabei nicht nur Gerüche von Lebewesen (Menschen, Tiere, Pflanzen), sondern auch Ausdünstungen von Baustoffen und ähnliches.

Ein besonderer Vorteil der erfindungsgemäßen Regelungsvorrichtung besteht auch darin, dass der Volumenstrom der Außenluftzufuhr und/oder der Abluftabführung visuell ablesbar zur Anzeige gebracht ist. Damit ist eine subjektive Prüfungsmöglichkeit und manuelle Einflussnahme gegeben.

Zur Umsetzung dieser Visualisierung schlägt der Erfinder beispielsweise vor, an dem Raumbediengerät ein Display oder mehrere Leuchtdioden (LEDs) vorzusehen. Die Leuchtdioden können ferner jeweils eine Farbe aufweisen, die dem durch sie verkörperten Anzeigewert entspricht, also zum Beispiel "rot" für schlechte Luftqualität und "grün" für eine gute Qualität. Darüber hinaus können bestimmte Zustände durch spezielle Leuchtfunktionen der Anzeigeelemente verdeutlicht werden. So ist daran gedacht, dass die Leuchtdioden zumindest zeitweise eine Blinkfunktion aufweisen.

Ein hohes Maß an Flexibilität ist mit einer erfindungsgemäßen Regelungsvorrichtung ferner dadurch erreichbar, dass die Regelungsvorrichtung als ein Baukastensystem entsprechend der an die Regelung der Luftqualität eines Raumes gestellten Anforderungen zusammenstellbar ist.

Neben der Regelungsvorrichtung wird ferner ein Verfahren zur Optimierung des Raumklimas in Innenräumen von Gebäuden mittels einer Regelungsvorrichtung in jedem zu klimatisierenden Raum vorgestellt. Dieses Verfahren ist durch eine temperaturabhängige und volumenstromabhängige Sensorregelung der Außenluftzufuhr und der Abluftabführung gekennzeichnet, so dass in jedem zu klimatisierenden Raum ein optimiertes Verhältnis zwischen Temperatur und Luftqualität gegeben ist. Die Abhängigkeit von der Raumtemperatur und der Luftqualität wird vorzugsweise durch die bereits beschriebene manuelle Vorgabe definiert.

Mit dem erfindungsgemäßen Verfahren lassen sich erhebliche Vorteile erzielen. So kann durch eine Temperaturmessung und eine in Abhängigkeit der gemessenen Temperatur prozentuale Verteilung des Außenluftzufuhr-Volumenstromes auf die zu klimatisierenden Räume in dem Raum mit dem höchsten Kühlbedarf ein maximaler Anteil des Außenluftzufuhr-Volumenstromes bereitgestellt werden.

Der Erfinder sieht einen weiteren Vorteil darin, dass eine Außenluftzufuhr solange zum Kühlen verwendet wird, wie die Kühlung mit Außenluft weniger Energie benötigt, als ein Kühlaggregat benötigen würde. Somit kann wertvolle Energie eingespart werden. Dies muss für jeden Raum individuell geregelt werden.

Von Bedeutung für die Umsetzbarkeit der komplexen Messungen, Einstellungen und Regelungen der einzelnen Elemente ist eine funktionierende Kommunikation, das heißt ein optimaler Datenaustausch sowie ein hierzu geeigneter Microcontroller, der die erforderliche Überwachungsfunktion ausübt und die einzelnen Prozesse koordiniert, erforderlich. Ein Bussystem innerhalb der Regelungsvorrichtung sorgt für den erforderlichen Datenaustausch beziehungsweise die erwähnte Datenkommunikation zur Bereitstellung eines Luftqualitätsmanagements eines Gebäudes oder eines Gebäudekomplexes.

Zur Durchführung des Verfahrens ist es von Vorteil, wenn jedem Leistungsabnehmer zunächst eine minimal und eine maximal zu beanspruchende Leistung innerhalb der Regelungsvorrichtung zugewiesen wird.
Folglich besteht eine Weiterbildung des Verfahrens darin, dass:
- zunächst eine minimale Leistungsressource (pro Raum zugewiesener Volumenstrom an Zuluft) bestimmt wird,
- anschließend der Gesamtleistungsbedarf (Summe der vergebenen Leistungsressourcen) der einzelnen Räume und/oder Abnehmer durch aufsummieren der Soll-Werte und der Ist-Werte ermittelt wird,
- dann aus der Differenz der Ist-Werte und der Soll-Werte über Regelalgorithmen der Volumenstrom der Zuluftzufuhr und der Abluftabführung ermittelt und daraus ein Vordruck (Kanaldruck) der Regelungsvorrichtung als Führungsgröße für die Volumenstromregelung bestimmt wird,
- nachfolgend, falls eine vollständige Auslastung der Klimaanlage noch nicht erreicht ist, den einzelnen Räumen und/oder Abnehmern geringfügig höhere Leistungsressourcen zugewiesen werden.

Dabei ist vorgesehen, dass die einzelnen Leistungsabnehmer ihre zugewiesen Leistungen selbständig verwalten und über Regelalgorithmen die Differenz zwischen Soll- und Istwerten ausregeln. Somit kann ein Eingreifen in den Regelungsprozess unterbleiben.

Um ein Energieabrechnungssystem bereitstellen zu können, wird von dem Erfinder vorgeschlagen, die von der Regelungsvorrichtung ermittelten Werte der zugeführten Außenluft sowie der zugeführten Wärmeenergie beziehungsweise der erbrachten Kühlleistung mit voreinstellbaren Kosten zu multiplizieren und die so berechneten Werte zur Anzeige zu bringen. Auf diese Weise ist bei einer Mehrraumanwendung auch eine zentrale Kostenerfassung möglich. Somit können Kosten für die Bereitstellung der Außenluft sowie Kältekosten, Befeuchtungskosten, Lufttransportkosten und/oder Wärmekosten ermittelt werden.

Mit der erfindungsgemäßen Regelungsvorrichtung und dem Verfahren hierzu ist es möglich, eine Messung der Rumluftqualitätsklassen, ein Visualisieren der gemessenen Rumluftqualitätsklassen und eine einfache Vorgabe der Raumluftqualitätsklasse durch den Raumbenutzer umzusetzen.

Darüber hinaus wird die Luftqualität der zugeführten Außenluft permanent und auslesbar protokolliert, um eine unnötige erhöhte Außenluftzufuhr durch schlecht gewartete Anlagen zu vermeiden.

Im Folgenden wird die Erfindung anhand eines bevorzugten Ausführungsbeispieles mit Hilfe der Figuren näher beschrieben, wobei nur die zum Verständnis der Erfindung notwendigen Merkmale dargestellt sind.

Die Figuren zeigen im Einzelnen:
- FIG 1:: ein Raumbediengerät;
- FIG 2:: die zweite Bedienebene eines Raumbediengerätes;
- FIG 3:: ein Blockschaltbild Raumbediengerät für Luftqualität und Temperatur;
- FIG 4-7:: vier Varianten der Klimatisierung von Räumen;

- FIG 8:: Energieeinsparpotentiale mit einer erfindungsgemäßen Regelungsvorrichtung;
- FIG 9:: eine Prinzipdarstellung einer Klimaanlage mit mehreren angeschlossenen Räumen;
- FIG 10:: ein Prinzip der Ventilatorregelung nach Klappen-position.

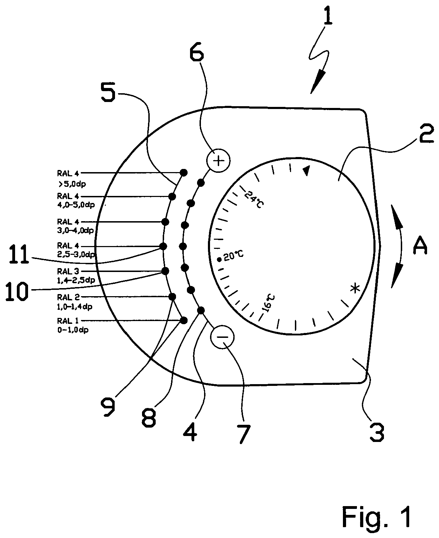

Die **Figur 1** zeigt beispielhaft eine Möglichkeit der Ausführung eines Raumbediengerätes 1, wie es für eine erfindungsgemäße Regelungsvorrichtung zum Einsatz kommen kann. Wesentliches Element des dargestellten Raumbediengerätes 1 ist ein Temperaturregler 2, mit dem manuell eine beliebige Raumtemperatur voreingestellt werden kann. Hierzu ist der Temperaturregler 2 in Richtung des Doppelpfeiles "A" drehbar in einem Gehäuse 3 gelagert. Seitlich des Temperaturreglers 2 befinden sich ferner zwei benachbart und mit gleichem Abstand zueinander verlaufende Reihen Leuchtdioden 4, 5. Die in der Figur 1 rechts dargestellte LED-Reihe 4 dient der Visualisierung des Außenluft-Volumenstromes. Mittels der Wahltaster 6 und 7 kann der Außenluft-Volumenstrom manuell eingestellt werden. Eine Erhöhung des Außenluft-Volumenstromes ist dabei durch den mit "+" gekennzeichneten Wahltaster 6 und eine Reduzierung durch den mit "-" gekennzeichneten Wahltaster 7 möglich. Werden beide Wahltaster 6 und 7 gleichzeitig gedrückt, so erfolgt dadurch eine Umschaltung von der manuellen Anwahl auf "Automatikregelung" der Außenluftzufuhr. Nach Ablauf eines frei definierbaren Zeitraums zwischen 5 Minuten und 2 Stunden erfolgt zudem die selbsttätige Umschaltung auf automatische Luftqualitätsregelung. Die Zahl der in der LED-Reihe 4 aufleuchtenden blauen LEDs symbolisiert den Außenluft-Volumenstrom, der dem zu klimatisierenden Raum zugeführt wird. Die LED-Reihe 4 ermöglicht darüber hinaus eine Anzeige der Nachlaufzeit durch blinkende LEDs.

Die benachbarte und mit gleichem Abstand zu der LED-Reihe 4 verlaufende LED-Reihe 5 des Raumbediengerätes 1 visualisiert die Luftqualität, wobei die Skalierung in RAL angegeben und deren Maßeinheit Dezipol (dp) ist. Grüne Leuchtdioden 9 symbolisieren hierbei eine gute, orange Leuchtdioden 10 eine verschlechterte und rote Leuchtdioden 11 eine schlechte Luftqualität als Anzeige der aktuellen Luftqualität. Blinkende LEDs werden hierbei als Anzeige des Sollwertes der Luftqualität oder als Anzeige der Empfindlichkeit genutzt.

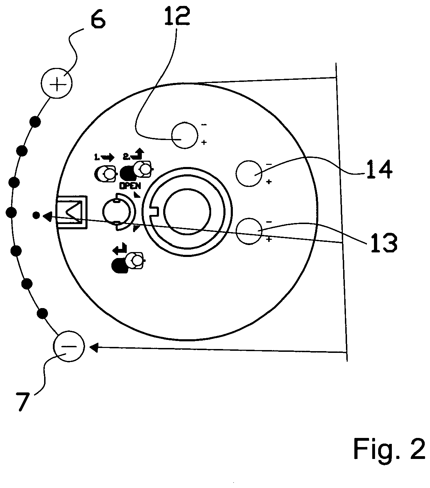

Eine Besonderheit des Raumbediengerätes 1 geht aus der Figur 2 hervor. Darin ist eine durch Abnehmen einer Bedieneinheit des Raumbediengerätes 1 zugängliche, zweite Bedienebene dargestellt. Die abnehmbare Bedieneinheit ist im vorliegenden Fall der Temperaturregler 2. Hinter diesem liegt die in Figur 2 gezeigte zweite Ebene mit verschiedenen weiteren Funktionen, die eine Einstellung der Regelungsvorrichtung ermöglichen. So kann hier zunächst mit dem Regler 12 ein Sollwert für die Luftqualität eingestellt werden. Dieser dient als Vorgabewert für die Regelungsvorrichtung. Während der Betätigung des als Potentiometer ausgeführten Reglers 12 blinkt die LED-Reihe 5 für die Luftqualität und zeigt so den Sollwert an.

Ferner kann in der zweiten Ebene mit dem Regler 13 die Empfindlichkeit der Luftqualität durch eine Skalenverschiebung am Raumbediengerät eingestellt werden. Auch dieser Wert stellt eine Basiseinstellung für die Regelungsvorrichtung dar. Während der Betätigung des als Potentiometer ausgeführten Reglers 13 blinkt ebenfalls die LED-Reihe 5 für die Luftqualität. Wird die Empfindlichkeit erhöht, blinken die LEDs, die die Erhöhung darstellen. Die oberste blinkende LED signalisiert den neuen Luftqualitätspegel inklusive der Sensitivitätserhöhung. Wird die Empfindlichkeit hingegen verringert, blinken die LED's, die die Verringerung darstellen. Die oberste nicht blinkende LED signalisiert dann den neuen Luftqualitätspegel inklusive der Sensitivitätsverringerung.
Der als Potentiometer ausgeführte Regler 14 dient der Einstellung der Nachlaufzeit. Hier kann zwischen 5 Minuten und 2 Stunden ein beliebiger Wert eingestellt werden. Diese Zeitvorgabe entspricht der Dauer der manuell eingestellten Außenluftzufuhr, bis die Regelungsvorrichtung selbsttätig in den Automatikbetrieb zurückkehrt. Während der Betätigung des Reglers 14 blinkt die LED-Reihe 4 für den Außenluft-Volumenstrom und zeigt die Nachlaufzeit skaliert an.

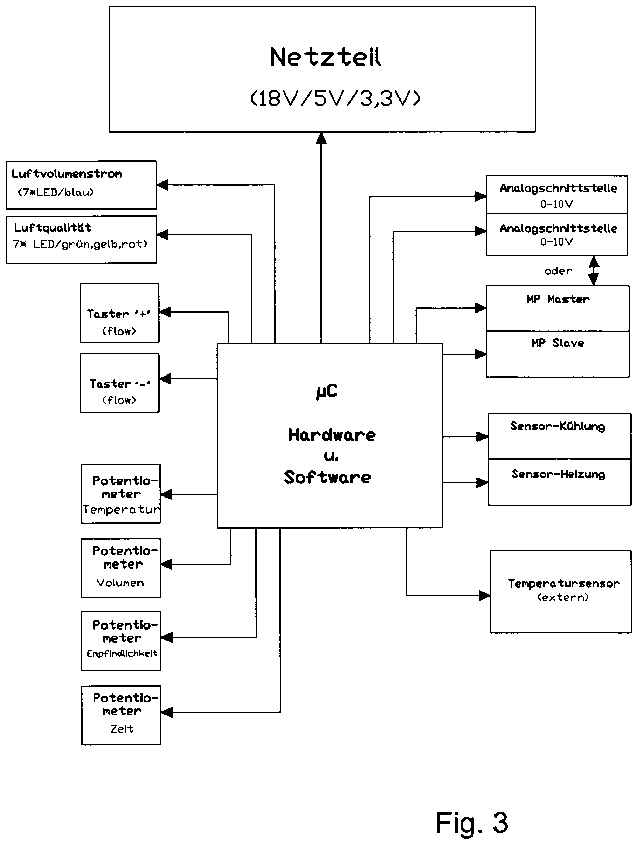

In der Figur 3 ist ein Blockschaltbild des Raumbediengerätes für Luftqualität und Temperatur gezeigt. Hiermit kann die Luftqualität in einem oder mehreren Räumen geregelt werden. Die umzuwälzende Luftmenge wird je nach Bedarf geregelt. Das System besteht aus verschiedenen Geräten, die einzeln und in Kombinationen betrieben werden können. Folgende Komponenten stehen dabei grundsätzlich für das System zur Verfügung und können nach der Art eines Baukastensystems kombiniert werden:
- Stromversorgung (Netzteil),
- Schnittstellen (analog)
- Sensoren für Kühlung / Heizung / Temperatur,
- Potentiometer (Temperatur, Volumenstrom, Empfindlichkeit, Zeit)
- Taster "+" und "-" (flow),
- Anzeigeeinrichtung (LEDs),
- Raumbediengerät, einschließlich eines Luftqualitätssensors.
Zusätzlich können zum Einsatz kommen:
- zusätzlicher Luftqualitätssensor im Edelstahl-Gehäuse für den Einsatz in einem Luftkanal,
- externer Präzisions-Temperatursensor,
- Volumenstromregler mit 0V- bis 10V- Anschlüssen,
- Volumenstromregler mit MP-Bus- Anschlüssen,
- Heiz-/ Kühlventile mit 0V- bis 10V- Anschlüssen,
- Heiz- / Kühlventile mit MP-Bus - Anschlüssen,
- GLT-Steuerung.

Aufgrund einer durchgängigen Bus-Kommunikation sind hohe E-nergieeinsparungspotentiale im Gesamtsystem möglich. Der Bus-koppler erweitert die Anzahl der anschließbaren Geräte. Der MP-Bus erlaubt eine Anzahl von maximal 16 Geräten. Über den Buskoppler kann die Geräteanzahl um das 16-fache vervielfältigt werden. Es ergibt sich insgesamt eine Anzahl von maximal 256 Geräten am MP-Bus.

Je nach Anforderung wird aus einem oder mehreren dieser Komponenten ein vollständiges System zusammengestellt. Die verschiedenen Systeme werden je nach Anforderung konfiguriert. Bedingt durch die hohe Anzahl an Parametern sind die Parameter zu Konfigurationssätzen zusammengefasst.

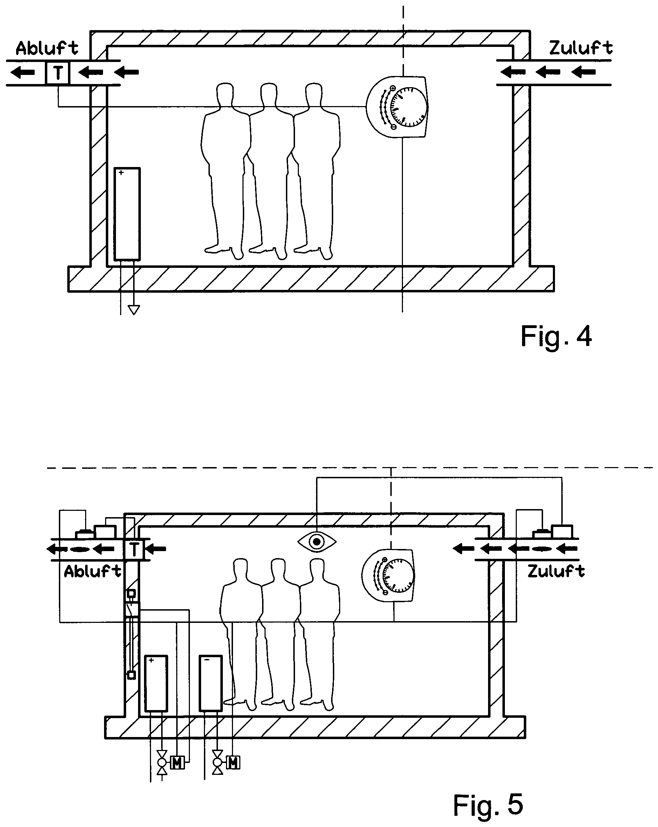

In den **Figuren 4 bis 7** sind vier verschiedene Varianten der Klimatisierung von Räumen dargestellt.

Die Variante eins in **Figur 4** ist mit einem 0 - 10 V Heizventil und einer Außenluft-Volumenstromsteuerung ausgestattet.

In **Figur 5** ist eine zweite Variante mit einem MP-Bussystem sowie der Möglichkeit des Heizens und Kühlens im zu klimatisierenden Raum gezeigt.

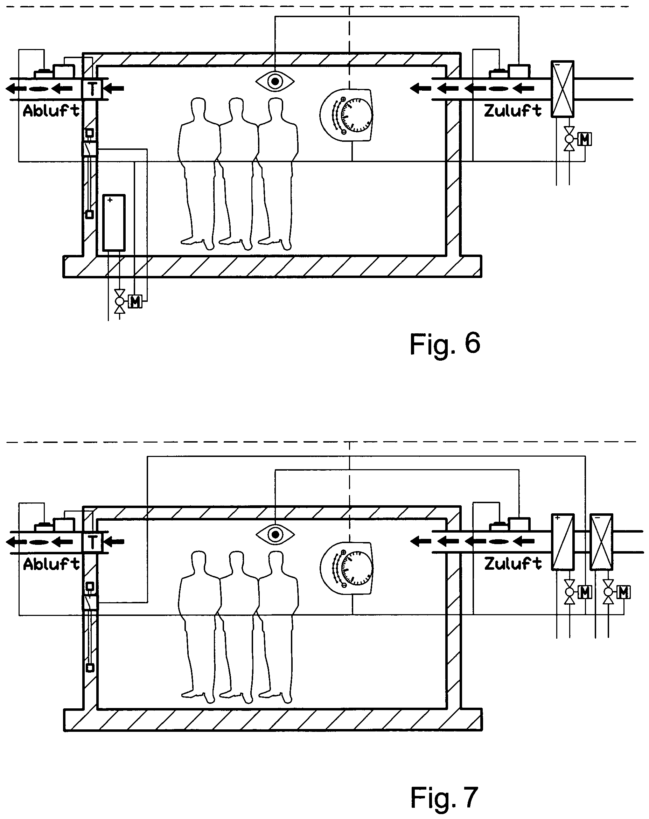

Die **Figur 6** stellt ferner eine dritte Variante mit einem MP-Bussystem sowie der Möglichkeit zum Heizen im zu klimatisierenden Raum und einer Kühlung mit dem Außenluft-Volumenstrom dar.

Aus der **Figur 7** geht eine vierte Variante mit einem MP-Bussystem und der Möglichkeit zum Heizen und Kühlen im Außenluftstrom hervor.

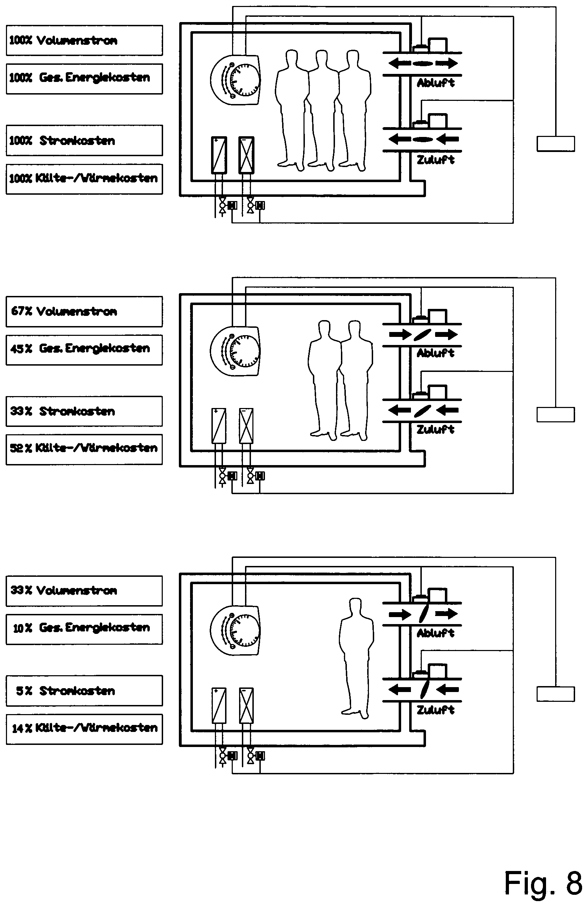

Die **Figur 8** veranschaulicht Energieeinsparpotentiale mit einer erfindungsgemäßen Regelungsvorrichtung. Eine wechselnde Anzahl Personen in den Räumen erfordert einen dementsprechend angepassten Außenluft-Volumenstrom. In den drei Darstellungen ist vergleichsweise gezeigt, wie durch die Regulierung der zugeführten Außenluft sowie der abzuführenden und verbrauchten Abluft wertvolle Energie eingespart werden kann. Anhand der Klappenstellungen der Ventile in den entsprechenden Luftkanälen kann der dargestellte, erzielbare Nutzen erreicht werden.

So zeigt die erste Darstellung vollständig offene Ventile und damit 100% Volumenstrom. Hier werden auch je 100% der Energie, Strom- und Kälte-/Wärmekosten verauslagt.

Im Bild darunter ist der Volumenstrom auf 67% reduziert, so dass bereits eine Einsparung an Energie erreicht wird und nur noch 45% der Gesamtenergiekosten anfallen. Die Stromkosten verringern sich auf 33% und Kälte-/Wärmekosten auf 52%.

Am charakteristischsten ist die dritte Darstellung, wo die Ventile nur 33% Volumenstrom zulassen. Hier sind die Energiekosten um 90% gesenkt, so dass nur noch 10% der Gesamtenergiekosten anfallen. Die Stromkosten verringern sich auf lediglich 5% und die Kälte-/Wärmekosten auf 14%.

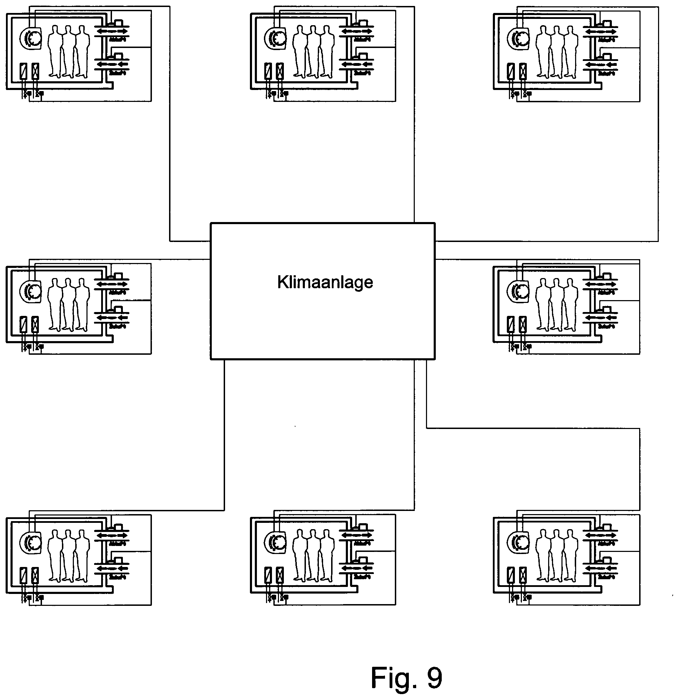

In der **Figur 9** wird der erfindungsgemäße Vorteil sinnbildlich veranschaulicht. So ist es möglich, mit einer Regelungsvorrichtung eine Klimaanlage bereitzustellen und über eine Verbindung mit je einem Master-Bus je eines Raumes eine individuell auf die Bedürfnisse angepasste Regelung der Luftqualität des Raumes zu regeln. Dabei können 8 beziehungsweise 64/256 Raumbediengeräte über Bus-Koppler an einer frei programmierbaren, integrierten Steuerung (DDC = Direct digital control) für Sensoren und Aktoren angeschlossen werden.

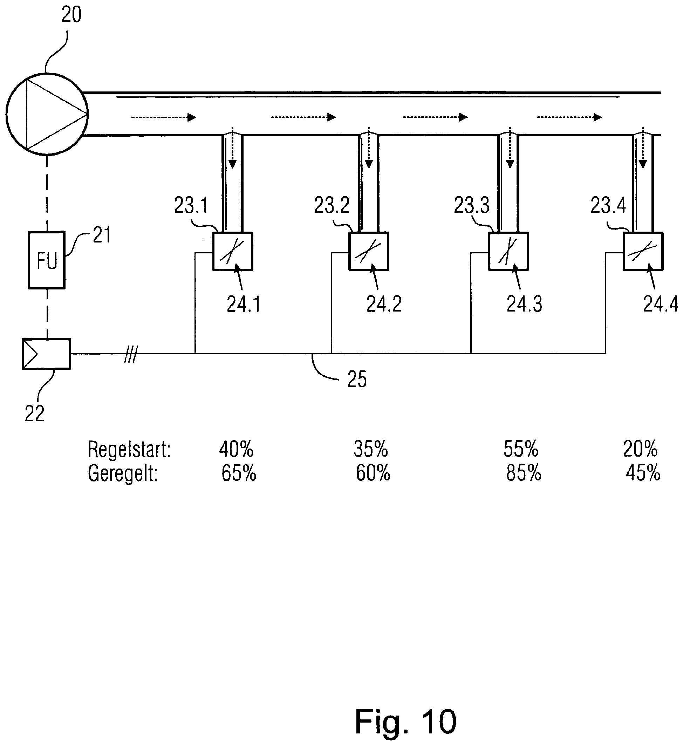

Letztlich zeigt die **Figur 10** ein Prinzip der Ventilatorregelung nach Klappenposition. Auch durch eine dementsprechende Regelung lassen sich erhebliche Einsparungspotentiale erzielen.

Die Vernetzung der Regelungsvorrichtung 22 über einen Bus erlaubt die Steuerung eines Ventilators 20 nach Klappenposition. Die Klappenpositionen können als Regelgröße zur energieeffizienten Steuerung des Ventilators 20, vorzugsweise über einen Frequenzumrichter 21, verwendet werden. Über einen Bus 25 werden die Klappenwinkel periodisch ermittelt. Dabei dient die am weitesten geöffnete Klappe als Referenz. Anschließend wird die Drehzahl des Ventilators 20 reduziert, bis die am weitesten geöffnete Klappe in einem vorgegebenen Maximalbereich steht, z.B. 85% bis 90%. Überschreitet die Klappenstellung der am weitesten geöffneten Klappe diesen Bereich, wird die Ventilatordrehzahl angehoben, bis die am weitesten geöffnete Klappe wieder in dem vorgegebenen Maximalbereich steht. Da sich die elektrische Leistungsaufnahme des Ventilators 20 mit der dritten Potenz zum Volumenstrom- beziehungsweise Drehzahlverhältnis ändert, ist es sehr wichtig, die Drehzahl des Ventilators bedarfsgerecht zu regeln.

In der Figur 10 sind zwei Situationen dargestellt, zum Regelstart in den unter den jeweiligen Klappenkästen 23.1-23.4 mit den darin angedeuteten Klappen 24.1-24.4 stehenden prozentualen Angaben der Klappenstellungen und in der darunter angeordneten Zeile die Klappenstellungen in der eingeregelten Situation. Zum Regelstart hatte die Klappe 24.3 eine Stellung von 55% Öffnung bei einem gleichzeitigen Überangebot an Luftleistung durch den Ventilator 20. Entsprechend den über den Bus 25 an die Regelungsvorrichtung 22 übertragenen Daten der Klappenstellung wurde die am Ventilator 20 anliegende Frequenz mit Hilfe des Frequenzumrichters 21 heruntergeregelt, während in Folge die Klappen 24.1-24.4 weiter öffneten, um den nötigen Volumenstrom zu erhalten. Sobald eine der Klappen einen vorgegebenen Maximalbereich erreicht hat und diesen nicht weiter überschreitet, verbleibt der Ventilator 20 in der aktuellen Regelposition, also der aktuellen Drehzahl. Damit wird eine ausreichende und optimale Verteilung der Luftmenge erzeugt, bei gleichzeitig möglichst wirtschaftlicher Herstellung des benötigten Volumenstroms über den Ventilator 20. Wird später in irgendeinem Raum mehr Luft, also Volumenstrom, benötigt, so öffnet sich die zugehörige Klappe über den vorgegebenen Maximalbereich hinaus. Dies wird von der Regelungsvorrichtung 22 detektiert und die Drehzahl des Ventilators wird erhöht, bis die Klappenstellung der am weitesten geöffneten Klappe sich wieder in dem vorgegebenen Maximalbereich befindet.
Für ein gutes Zusammenspiel der Gesamtregelung des Gesamtluftstromes über den Ventilator 20 und der Raumeinzelregelung des individuellen Luftstromes in den einzelnen Räumen, abhängig von der dort gemessenen Luftqualität, ist es vorteilhaft, wenn das Zeitverhalten der individuellen Raumregelung eindeutig kürzer ausgelegt ist, als das Zeitverhalten der Gesamtregelung, also die Gesamtregelung träger als die Raumeinzelregelung ist.
Es versteht sich, dass die vorstehend genannten Merkmale der Erfindung nicht nur in der jeweils angegebenen Kombination, sondern auch in anderen Kombinationen, sofern diese durch den Gegenstand der Ansprüche gedeckt werden, verwendbar sind, ohne den Rahmen der Erfindung zu verlassen.

### Bezugszeichenliste

- 1: Raumbediengerät
- 2: Temperaturregler
- 3: Gehäuse
- 4: ED-Reihe
- 5: LED-Reihe
- 6: Wahltaster "+"
- 7: Wahltaster "-"
- 8: Leuchtdioden blau
- 9: Leuchtdioden grün
- 10: Leuchtdioden orange
- 11: Leuchtdioden rot
- 12: Regler Sollwert Luftqualität
- 13: Regler für die Empfindlichkeit der Luftqualität
- 14: Regler für die Nachlaufzeit
- 20: Ventilator
- 21: Frequenzumrichter
- 22: Regelungsvorrichtung
- 23.1-23.4: Klappenkästen
- 24.1-24.4: Klappen
- 25: Bus

## Patentansprüche

1. Regelungsvorrichtung (22) zur raumindividuellen Optimierung eines Raumklimas in Innenräumen von Gebäuden mit einem Raumbediengerät (1), welches Mittel zur Einstellung und Visualisierung einer Raumtemperaturvorgabe und Mittel zur Visualisierung einer im Raum vorliegenden Luftqualität aufweist, und mit einem Temperatursensor sowie mit einem Luftqualitätssensor ausgerüstet ist, wobei die automatischen Regelung der Temperatur und der Luftqualität im Raumbediengerät (1) angeordnet ist, wobei die Regelung der Luftqualität über einen Volumenstrom der Außenluftzufuhr und der Abluftabführung geregelt wird, und eine Steuerverbindung zu einer zentralen Klimaanlage vorgesehen ist, über welche die zur Regelung erforderlichen Stellwerte an die zentrale Klimaanlage weitergeleitet werden, wobei das Raumbediengerät (1) eine Anzeige (5) der Luftqualität in RAL-Klassen und/oder in der Einheit Dezipol aufweist.

2. Regelungsvorrichtung (22) gemäß dem voranstehenden Patentanspruch 1, **dadurch gekennzeichnet, dass** das Raumbediengerät (1) ein Master für Kühl- und/ oder Heizaggregate sowie für Außenluftzufuhr und/oder Abluftabführung und ein Slave für eine übergeordnete Leittechnik ist.

3. Regelungsvorrichtung (22) gemäß einem der voranstehenden Patentansprüche 1 bis 2, **dadurch gekennzeichnet, dass** das Raumbediengerät (1) in zwei unabhängige Bussysteme integriert ist.

4. Regelungsvorrichtung (22) gemäß dem voranstehenden Patentanspruch 3, **dadurch gekennzeichnet, dass** das Raumbediengerät (1) in das erste Bussystem für die Raumsteuerung als Master und über das zweite Bussystem als Slave mit der Gesamtklimaanlage eingebunden ist.

5. Regelungsvorrichtung (22) gemäß einem der voranstehenden Patentansprüche 1 bis 4, **dadurch gekennzeichnet, dass** zumindest der Volumenstrom der Außenluftzufuhr manuell regelbar ist.

6. Regelungsvorrichtung (22) gemäß dem voranstehenden Patentanspruch 5, **dadurch gekennzeichnet, dass** der manuell eingestellte Wert für den Volumenstrom der Außenluftzufuhr manuell auf "Automatikbetrieb" umstellbar ist.

7. Regelungsvorrichtung (22) gemäß einem der voranstehenden Patentansprüche 5 bis 6, **dadurch gekennzeichnet, dass** die manuell eingestellte Außenluftzufuhr für eine frei wählbare Nachlaufzeit bis zum automatischen Umschalten auf "Automatikbetrieb" der Regelungsvorrichtung (22) einstellbar ist.

8. Regelungsvorrichtung (22) gemäß dem voranstehenden Patentanspruch 7, **dadurch gekennzeichnet, dass** die Nachlaufzeit zwischen 5 Minuten und 2 Stunden beträgt.

9. Regelungsvorrichtung (22) gemäß einem der voranstehenden Patentansprüche 1 bis 8, **dadurch gekennzeichnet, dass** das Raumbediengerät (1) eine Anzeige der Empfindlichkeit der Luftqualität aufweist.

10. Verfahren zur Optimierung des Raumklimas in Innenräumen von Gebäuden mittels einer Regelungsvorrichtung (22) gemäß einem der voranstehenden Patentansprüche 1 bis 9 in jedem zu klimatisierenden Raum, **gekennzeichnet durch** eine temperaturabhängige und volumenstromabhängige Sensorregelung der Außenluftzufuhr und der Abluftabführung, so dass in jedem zu klimatisierenden Raum ein optimiertes Verhältnis zwischen Temperatur und Luftqualität gegeben ist.

11. Verfahren gemäß dem voranstehenden Patentanspruch 10, **dadurch gekennzeichnet, dass** jedem Leistungsabnehmer eine minimal und eine maximal zu beanspruchende Leistung innerhalb der Regelungsvorrichtung (22) zugewiesen wird.

12. Verfahren gemäß dem voranstehenden Patentanspruch 11, **dadurch gekennzeichnet, dass**:
- zunächst eine minimale Leistungsressource bestimmt wird,
- anschließend der Gesamtleistungsbedarf der einzelnen Räume und/oder Abnehmer durch aufsummieren der Soll-Werte und der Ist-Werte ermittelt wird,
- dann aus der Differenz der Ist-Werte und der Soll-Werte über Regelalgorithmen der Volumenstrom der Zuluftzufuhr und der Abluftabführung ermittelt und daraus ein Vordruck (Kanaldruck) der Regelungsvorrichtung (22) als Führungsgröße für die Volumenstromregelung bestimmt wird,
- nachfolgend, falls eine vollständige Auslastung der Klimaanlage noch nicht erreicht ist, den einzelnen Räumen und/oder Abnehmern geringfügig erhöhte Leistungsressourcen zugewiesen werden.

13. Verfahren gemäß einem der voranstehenden Patentansprüche 11 bis 12, **dadurch gekennzeichnet, dass** die Leistungsabnehmer ihre zugewiesen Leistungen selbständig verwalten und über Regelalgorithmen die Differenz zwischen Soll- und Istwerten ausregeln.

14. Verfahren gemäß einem der voranstehenden Patentansprüche 10 bis 13, **dadurch gekennzeichnet, dass** ein Energieabrechnungssystem bereitgestellt wird, in dem die von der Regelungsvorrichtung (22) ermittelten Werte der zugeführten Außenluft sowie der zugeführten Wärmeenergie beziehungsweise der erbrachten Kühlleistung mit voreinstellbaren Kosten multipliziert und die so berechneten Werte zur Anzeige gebracht werden.

15. Verfahren gemäß dem voranstehenden Patentanspruch 14, **dadurch gekennzeichnet, dass** mit der Regelungsvorrichtung (22) eine zentrale Kostenerfassung für die Bereitstellung der Außenluft in m³/h erfolgt sowie Kältekosten, Befeuchtungskosten, Lufttransportkosten und/oder Wärmekosten ermittelt werden.

## Claims

1. Control device (22) for room-by-room optimization of room conditions in interior rooms of buildings, having a room operating device (1) which has means for adjusting and visualising a room temperature set point and means for visualising the air quality present in the room, and which is equipped with a temperature sensor and with an air quality sensor, wherein the automatic control of the temperature and the air quality is arranged in the room operating device (1), wherein the control of the air quality is carried out via a volume flow of the outside air supply and the exhaust air removal, and wherein a control connection to a central air conditioning system is provided, via which the actuating values required for the control are passed onto the central air conditioning system, wherein the room operating device (1) has a display (5) of the air quality in RAL classes and/or in the unit decipol.

2. Control device (22) according to the preceding Patent Claim 1, **characterized in that** the room operating device (1) is a master for cooling and/or heating units and for outside air supply and/or exhaust air removal, and a slave for higher-order control technology.

3. Control device (22) according to one of the preceding Patent Claims 1 to 2, **characterized in that** the room operating device (1) is integrated into two independent bus systems.

4. Control device (22) according to the preceding Patent Claim 3, **characterized in that** the room operating device (1) is incorporated in the first bus system as master for the room control, and via the second bus system as a slave for the overall air conditioning system.

5. Control device (22) according to one of the preceding Patent Claims 1 to 4, **characterized in that** at least the volume flow of the outside air supply is manually controllable.

6. Control device (22) according to the preceding Patent Claim 5, **characterized in that** the manually adjusted value for the volume flow of the outside air supply can be changed over manually to "automatic operation".

7. Control device (22) according to one of the preceding Patent Claims 5 to 6, **characterized in that** the manually adjusted outside air supply can be adjusted for a freely selectable overrun time until the automatic changeover to "automatic operation" of the control device (22).

8. Control device (22) according to the preceding Patent Claim 7, **characterized in that** the overrun time is between 5 minutes and 2 hours.

9. Control device (22) according to one of the preceding Patent Claims 1 to 8, **characterized in that** the room operating device (1) has a display of the sensitivity of the air quality.

10. Method for optimizing the room conditions in interior rooms of buildings by means of a control device (22) according to one of the preceding Patent Claims 1 to 9 in each room to be conditioned, **characterized by** temperature-dependent and volume flow-dependent sensor control of the outside air supply and of the exhaust air removal, so that in each room to be conditioned an optimized relationship between temperature and air quality is provided.

11. Method according to the preceding Patent Claim 10, **characterized in that** each output recipient is allocated a minimum and a maximum output to be demanded within the control device (22).

12. Method according to the preceding Patent Claim 11, **characterized in that**:
- first a minimum output resource is determined,
- then the total power requirement of the individual rooms and/or recipients is determined by summing the set points and the actual values,
- then from the difference between the actual values and the set points, the volume flow of the input air supply and the exhaust air removal is determined via control algorithms and from this a pilot pressure (duct pressure) of the control device (22) is determined as reference variable for the volume flow control,
- then if complete utilization of the air conditioning system has not yet been reached the individual rooms and/or recipients are allocated slightly elevated output resources.

13. Method according to one of the preceding Patent Claims 11 to 12, **characterized in that** the output recipients independently manage their allocated outputs and control out the difference between set points and actual values via control algorithms.

14. Method according to one of the preceding Patent Claims 10 to 13, **characterized in that** an energy accounting system is provided in which the values of the supplied outside air and the thermal energy supplied respective the cooling output provided is multiplied by pre-adjustable costs by the control device (22) and the values thus calculated are displayed.

15. Method according to the preceding Patent Claim 14, **characterized in that** by using the control device (22) central cost recording for the provision of outside air in m³/h is carried out and refrigeration costs, humidifying costs, air transport costs and/or heat costs are determined.

## Revendications

1. Ensemble de régulation (22) permettant d'optimiser de manière individualisée le climat de locaux intérieurs de bâtiments, l'ensemble présentant un appareil (1) de desserte de local qui présente des moyens de réglage et de visualisation de la consigne de température d'un local et des moyens de visualisation de la qualité de l'air présent dans le local, un capteur de température et un capteur de qualité d'air,
la régulation automatique de la température et de la qualité de l'air étant disposée dans l'appareil (1) de dessert de locaux, la régulation de la qualité de l'air étant régulée par l'intermédiaire des débits volumiques d'apport d'air extérieur et d'évacuation d'air,
une liaison de commande à une installation centralisée de climatisation étant prévue et transmettant les valeurs de réglage nécessaires pour la régulation à l'installation centrale de climatisation,
l'appareil (1) de desserte de local présentant un affichage (5) de la qualité de l'air en classes RAL et/ou en unités Décipol.

2. Ensemble de régulation (22) selon la revendication 1 qui précède, **caractérisé en ce que** l'appareil (1) de desserte de local est maître pour des appareils de refroidissement et/ou de chauffage ainsi que pour l'amenée d'air extérieur et/ou l'évacuation d'air et est esclave pour une technique de guidage d'ordre hiérarchique supérieur.

3. Ensemble de régulation (22) selon l'une des revendications 1 et 2 qui précèdent, **caractérisé en ce que** l'appareil (1) de desserte de local est intégré dans deux systèmes de bus indépendants.

4. Ensemble de régulation (22) selon la revendication 3 qui précède, **caractérisé en ce que** l'appareil (1) de desserte de local est intégré comme maître dans le premier système de bus de commande du local et est intégré comme esclave dans l'installation globale de climatisation par l'intermédiaire du deuxième système de bus.

5. Ensemble de régulation (22) selon l'une des revendications 1 à 4 qui précèdent, **caractérisé en ce qu'**au moins le débit volumique d'apport d'air extérieur peut être régulé manuellement.

6. Ensemble de régulation (22) selon la revendication 5 qui précède, **caractérisé en ce que** la valeur du débit volumique d'apport air extérieur réglée manuellement peut être basculée manuellement en "fonctionnement automatique".

7. Ensemble de régulation (22) selon l'une des revendications 5 et 6 qui précèdent, **caractérisé en ce que** l'apport d'air extérieur réglé manuellement peut être réglé pour un temps d'attente sélectionné librement jusqu'au basculement automatique en "fonctionnement automatique" de l'ensemble de régulation (22).

8. Ensemble de régulation (22) selon la revendication 7 qui précède, **caractérisé en ce que** le temps de latence est compris entre 5 minutes et 2 heures.

9. Ensemble de régulation (22) selon l'une des revendications 1 à 8 qui précèdent, **caractérisé en ce que** l'appareil (1) de desserte de local présente un affichage de la sensibilité de la qualité de l'air.

10. Procédé d'optimisation du climat de locaux intérieurs de bâtiments au moyen d'un ensemble de régulation (22) selon l'une des revendications 1 à 9 prévu dans chacun des locaux à climatiser, **caractérisé par** une régulation par capteurs dépendant de la température et dépendant des débits volumiques de l'apport d'air extérieur et de l'évacuation d'air, de telle sorte que dans chaque local à climatiser on obtienne un rapport optimisé entre la température et la qualité de l'air.

11. Procédé selon la revendication 10 qui précède, **caractérisé en ce qu'**une puissance minimale et une puissance maximale consommables sont attribuées à chaque consommateur d'énergie à l'intérieur de l'ensemble de régulation (22).

12. Procédé selon la revendication 11 qui précède, **caractérisé en ce que**
tout d'abord, une ressource minimale de puissance est déterminée,
ensuite, les besoins totaux en énergie des différents locaux et/ou consommateurs sont déterminés par addition des valeurs de consigne et des valeurs effectives,
ensuite, à partir de la différence entre les valeurs effectives et les valeurs de consigne, les débits volumiques de l'apport d'air et de l'évacuation d'air sont déterminés par l'intermédiaire d'algorithmes de régulation et à partir de là, une pré-pression de canal) de l'ensemble de régulation (22) est déterminée en tant que grandeur de guidage de la régulation des débits volumiques et
ensuite, au cas où l'installation de climatisation n'a pas encore atteint sa pleine capacité, des ressources en énergie légèrement supérieures sont attribuées aux différents locaux et/ou consommateurs.

13. Procédé selon l'une des revendications 11 à 12 qui précèdent, **caractérisé en ce que** les consommateurs d'énergie administrent automatiquement les puissances qui leurs sont attribuées et régulent la différence entre les valeurs de consigne et les valeurs effectives par l'intermédiaire d'algorithmes de régulation.

14. Procédé selon l'une des revendications 10 à 13 qui précèdent, **caractérisé en ce qu'**il présente un système de facturation de l'énergie dans lequel les valeurs de l'air extérieur apporté ainsi que de l'énergie thermique apportée respectivement de la puissance de refroidissement consommée, déterminées par l'ensemble de régulation (22), sont multipliées par des coûts préalablement définis, les valeurs ainsi calculées étant affichées.

15. Procédé selon la revendication 14 qui précède, **caractérisé en ce qu'**une détermination centralisée des coûts de l'apport d'air extérieur, en m³/h, et des coûts de refroidissement, des coûts d'humidification, des coûts de transport d'air et/ou des coûts de chauffage s'effectue à l'aide de l'ensemble de régulation (22).
